# EUROPÄISCHE PATENTSCHRIFT

(11) **EP 1 113 034 B1**
(45) Veröffentlichungstag und Bekanntmachung des Hinweises auf die Patenterteilung: **12.09.2001**
(21) Anmeldenummer: 99125759.3
(22) Anmeldetag: 23.12.1999
(51) Int. Cl.: C08G 63/20, C08L 27/06

(54) **Mit isomeren Nonanolen abgeschlossene Polyester, Verfahren zu ihrer Herstellung und ihre Verwendung als Weichmacher**
Polyester terminated with isomeric nonanols, process for its preparation and its use as plasticizer
Polyester terminé par des nonanols isomériques, procédé pour sa préparation et son utilisation comme plastifiant

(43) Veröffentlichungstag der Anmeldung: 04.07.2001
(73) Patentinhaber: BASF AKTIENGESELLSCHAFT, 67056 Ludwigshafen (DE)
(72) Erfinder: Holzmann, Jürgen, 67071 Ludwigshafen (DE); Breitscheidel, Boris Dr., 67117 Limburgerhof (DE); Disteldorf, Walter Dr., 67157 Wachenheim (DE); Haller, Christiane, 68782 Brühl (DE); Morsbach, Bernd, 67069 Ludwigshafen (DE)

(56) Entgegenhaltungen:
- EP-A- 0 278 407
- EP-A- 0 603 630
- WO-A-92/13818
- DE-A- 2 855 421
- US-A- 5 281 647
- PATENT ABSTRACTS OF JAPAN vol. 004, no. 186 (C-036), 20. Dezember 1980 (1980-12-20) & JP 55 124737 A (NISSAN CHEM IND LTD), 26. September 1980 (1980-09-26)

## Beschreibung

Kunststoffe basieren zumeist auf Materialien, die aus organischen Monomeren durch Polymerisation erhältlich sind. In Abhängigkeit von ihrer chemischen Konstitution und der besonderen Umstände des Herstellverfahrens weisen diese Polymeren charakteristische physikalische Eigenschaften wie Elastizität auf.

In diese Polymeren bringt man vor deren Verarbeitung zu Gebrauchsgegenständen üblicherweise noch weitere Zusatzstoffe ein, um ihre Anwendungseigenschaften gezielt zu verändern, z.B. Füllstoffe, Farbstoffe, Flammschutzmittel und Weichmacher. Die Weichmacher dienen dazu, die Elastizität der daraus hergestellten Gebrauchsgegenstände dauerhaft zu erhalten oder noch zu verbessern.

Ein Polymer, für das die hier geschilderte Problematik ganz besonders bedeutsam ist, ist Polyvinylchlorid. Es wird großen Maßstab industriell hergestellt und geht in zahllose Gegenstände des täglichen Gebrauchs ein.

Je nachdem, welcher chemischen Stoffklasse ein Weichmacher angehört, können sich für den Fachmann ganz spezifische neue Aufgaben durch seine Verwendung ergeben. Besondere Aufmerksamkeit gilt dabei dem Austreten von Weichmachern aus den Materialien, etwa durch Ausschwitzen, bei dem der Weichmacher meist einen Flüssigkeitsfilm auf der Materialoberfläche bildet, oder durch Ausdampfen. Ein weiteres Phänomen ist die Migration, der Übertritt des Weichmachers aus dem Material und anschließendes Eindringen in einen mit dem Material in Kontakt stehenden Kunststoff.

Eine wichtige Klasse von Weichmachern sind Polyester von Dicarbonsäuren. Sie werden insbesondere bei der Herstellung von Folien, Beschichtungen, Profilen, Bodenbelägen und Kabeln auf Weich-PVC-Basis eingesetzt, wenn erhöhte Anforderungen an die Extraktionsbeständigkeit, vor allem gegenüber Benzin, Ölen und Fetten, und weiterhin an die UV-Beständigkeit und Flüchtigkeit des Weichmachers gestellt werden.

Bekannt sind bereits Polyester-Weichmacher aus Dicarbonsäuren und Diolen, deren endständige Alkoholgruppen - bei Synthesen mit Diolüberschuß - mit Monocarbonsäuren bzw. deren endständige Säuregruppen - bei Synthesen mit Dicarbonsäureüberschuß - mit einwertigen Alkoholen verestert, also "abgeschlossen" sind.

Aus der RO-B 104 737 ist ein Verfahren zur Herstellung weichmachender aliphatischer linearer Polyester bekannt, bei dem man Adipinsäure mit Propylenglykol und 2-Ethylhexanol umsetzt.

Die GB-A 1 173 323 beschreibt PVC-Zusammensetzungen, die einen Weichmacher enthalten, der beispielsweise aus Adipinsäure, 1,2-Propandiol und Isodecanol aufgebaut sein kann.

Die US-A 5 281 647 offenbart ein Verfahren zur Herstellung eines Weichmachers, bei dem man beispielsweise Adipinsäure mit einem sterisch gehinderten Diol wie Neopentylglykol und einem weiteren Diol, etwa einem Butylenglykol, umsetzt. Das dabei erhaltene Produkt wird anschließend mit einem Monoalkohol zur Reaktion gebracht, wobei der Alkohol ein Nonylalkohol sein kann.

Die bereits bekannten Weichmacher vom Polyester-Typ sind jedoch noch nicht hinreichend mit PVC verträglich, und sie treten daher in erheblichem Umfang während des Gebrauchs aus. Dadurch nimmt die Elastizität etwa von Weich-PVC-Compounds, die mit diesen Weichmachern hergestellt worden sind, mit der Zeit deutlich ab. Weiterhin zeigen diese bekannten Weichmacher ein hohes Maß an Migration aus solchen Werkstoffen in andere Kunststoffe, mit denen sie in Kontakt kommen.

Aufgabe der vorliegenden Erfindung war es somit, Weichmacher vom Polyestertyp bereitzustellen, die mit Kunststoffe gut verträglich sind und, insbesondere in Weich-PVC-Compounds verarbeitet, nur eine geringe Neigung zur Migration in andere Kunststoffe zeigen, mit denen sie in Kontakt kommen.

Demgemäß wurden als Weichmacher geeignete Polyester gefunden, die man durch Umsetzung von aliphatischen Dicarbonsäuren, Neopentylglykol, mindestens einem weiteren Diol und einem Nonanol-Gemisch erhält, wobei das Nonanol-Gemisch vorwiegend aus 1-Nonanol, Monomethyloctanolen, Dimethylheptanolen und Monoethylheptanolen besteht.

Weiterhin wurden neue Nonanol-Gemische gefunden sowie ein Verfahren zur Herstellung der Polyester und die Verwendung der Polyester als Weichmacher für Kunststoffe oder Polymere.

Sofern die Dicarbonsäuren, das Neopentylglykol, das weitere Diol bzw. die weiteren Diole und das Nonanol-Gemisch zu den erfindungsgemäßen Polyestern umgesetzt wurden, soll hierin, wenn die Zusammensetzung der Polyester bezogen auf die Ausgangsstoffe beschrieben wird, von Dicarbonsäureeinheiten, Neopentylglykoleinheiten, Dioleinheiten bzw. Nonanoleinheiten in dem Polyester die Rede sein.

Das erfindungsgemäß verwendete Nonanol-Gemisch ist besonders zweckmäßig gemäß der früheren deutschen Patentanmeldung mit dem amtlichen Aktenzeichen 19924339.5 in einem mehrstufigen Verfahren ausgehend von einem Butene enthaltenden Kohlenwasserstoffgemisch erhältlich. In einem ersten Schritt werden die Butene zu einem Gemisch isomerer Octene dimerisiert. Das Octengemisch wird anschließend zu C₉-Aldehyden hydroformyliert und nachfolgend zu dem Nonanol-Gemisch hydriert. Bei dieser Reaktionsfolge sind zumindest bei der Butendimerisierung, vorzugsweise bei der Butendimerisierung und der Hydroformylierung, spezielle, definierte Randbedingungen einzuhalten.

So ist es bevorzugt, dass das Gemisch isomerer Octene durch Inkontaktbringen eines Butene enthaltenden Kohlenwasserstoffgemisches mit einem Nickeloxid enthaltenden heterogenen Katalysator erhalten wird. vorzugsweise beträgt der iso-Butengehalt des Kohlenwasserstoffgemisches 5 Gew.-% oder weniger, insbesondere 3 Gew.-% oder weniger, besonders bevorzugt 2 Gew.-% oder weniger, und am meisten bevorzugt 1,5 Gew.-% oder weniger, jeweils bezogen auf den Gesamtbutengehalt. Ein hierfür geeigneter Kohlenwasserstoffstrom ist der sogenannte C₄-Schnitt, ein Gemisch aus Butenen und Butanen, das in großen Mengen aus FCC-Anlagen oder Steamcrakkern zur Verfügung steht. Als besonders bevorzugter Einsatzstoff wird das sogenannte Raffinat II verwendet, bei dem es sich um einen iso-Buten-abgereicherten C₄-Schnitt handelt.

Ein bevorzugtes Einsatzmaterial enthält 50 bis 100, vorzugsweise 80 bis 95, Gew.-% Butene und 0 bis 50, vorzugsweise 5 bis 20, Gew.-% Butane. Als allgemeiner quantitativer Rahmen lässt sich folgende Zusammensetzung der Butene anführen:

| | |
|---|---|
| 1-Buten | 1 bis 98 Gew.-%, |
| cis-2-Buten | 1 bis 50 Gew.-%, |
| trans-2-Buten | 1 bis 98 Gew.-%, |
| iso-Buten | bis zu 5 Gew.-%. |

Als Katalysator kommen an sich bekannte, Nickeloxid enthaltende Katalysatoren in Betracht, wie sie z.B. von O'Connor et al. in Catalysis Today, 6 (1990), S. 329 beschrieben sind. Es können geträgerte Nickeloxidkatalysatoren verwendet werden, wobei als Trägermaterialien Kieselsäure, Tonerde, Aluminosilicate, Aluminosilicate mit Schichtstruktur und Zeolithe in Betracht kommen. Besonders geeignet sind Fällungskatalysatoren, die durch Mischen wäßriger Lösungen von Nickelsalzen und Silicaten, z.B. von Natriumsilicat und Nickelnitrat, und gegebenenfalls weiteren Bestandteilen, wie Aluminiumsalzen, z.B. Aluminiumnitrat, und Calcinieren erhältlich sind.

Besonders bevorzugt sind Katalysatoren, die im Wesentlichen aus NiO, SiO₂, TiO₂ und/oder ZrO₂ sowie gegebenenfalls Al₂O₃ bestehen. Am meisten bevorzugt ist ein Katalysator, der als wesentliche aktive Bestandteile 10 bis 70 Gew.-% Nickeloxid, 5 bis 30 Gew.-% Titandioxid und/oder Zirkondioxid, 0 bis 20 Gew.-% Aluminiumoxid und als Rest Siliciumdioxid enthält. Ein solcher Katalysator ist durch Fällung der Katalysatormasse bei pH 5 bis 9 durch Zugabe einer Nickelnitrat enthaltenden wässrigen Lösung zu einer Alkaliwasserglaslösung, die Titandioxid und/oder Zirkondioxid enthält, Filtrieren, Trocknen und Tempern bei 350 bis 650°C erhältlich. Zur Herstellung dieser Katalysatoren wird im Einzelnen auf die DE-A 43 39 713 verwiesen. Auf die Offenbarung dieser Druckschrift wird vollinhaltlich Bezug genommen.

Das Inkontaktbringen des die Butene enthaltenden Kohlenwasserstoffgemisches mit dem Katalysator erfolgt vorzugsweise bei Temperaturen von 30 bis 280, insbesondere 30 bis 140 und besonders bevorzugt von 40 bis 130°C. Es erfolgt vorzugsweise bei einem Druck von 10 bis 300, insbesondere von 15 bis 100 und besonders bevorzugt von 20 bis 80 bar. Der Druck wird dabei zweckmäßigerweise so eingestellt, dass bei der gewählten Temperatur das olefinreiche Kohlenwasserstoffgemisch flüssig oder im überkritischen Zustand vorliegt.

Geeignete Reaktionsapparaturen für das Inkontaktbringen des Kohlenwasserstoffgemisches mit dem heterogenen Katalysator sind z.B. Rohrbündelreaktoren oder Schachtöfen. Aufgrund der geringeren Investitionskosten sind Schachtöfen bevorzugt. Die Dimerisierung kann in einem einzelnen Reaktor durchgeführt werden, wobei der Oligomerisierungskatalysator in einem einzigen oder mehreren Festbetten im Reaktor angeordnet sein kann. Alternativ kann eine Reaktorkaskade aus mehreren, vorzugsweise zwei, hintereinandergeschalteten Reaktoren eingesetzt werden, wobei beim Passieren des bzw. der dem letzten Reaktor der Kaskade vorgeschalteten Reaktors bzw. Reaktoren die Butendimerisierung im Reaktionsgemisch nur bis zu einem Teilumsatz betrieben wird und der gewünschte Endumsatz erst beim Passieren des Reaktionsgemisches durch den letzten Reaktor der Kaskade erzielt wird. Die Butendimerisierung erfolgt vorzugsweise in einem adiabatischen Reaktor oder einer adiabatischen Reaktorkaskade.

Nach dem Verlassen des Reaktors bzw. des letzten Reaktors einer Kaskade werden aus dem Reaktoraustrag die gebildeten Octene und gegebenenfalls höhere Oligomere von den nicht umgesetzten Butenen und Butanen abgetrennt. Die gebildeten Oligomere können in einem nachfolgenden Vakuumfraktionierungsschritt aufgereinigt werden, wobei eine reine Octenfraktion gewonnen wird. In geringem Umfang werden bei der Butendimerisierung in der Regel auch Dodecene erhalten. Diese werden vorzugsweise vor der weiteren Umsetzung von den Octenen abgetrennt.

In einer bevorzugten Ausführungsform wird der von den gebildeten Oligomeren befreite Reaktoraustrag, der im Wesentlichen aus nicht umgesetzten Butenen und Butanen besteht, vollständig oder zum Teil zurückgeführt. Es ist bevorzugt, das Rückführverhältnis so zu wählen, dass die Konzentration an Oligomeren im Reaktionsgemisch 35, vorzugsweise 20 Gew.-%, bezogen auf das Reaktions-Kohlenwasserstoffgemisch, nicht übersteigt. Diese Maßnahme erhöht die Selektivität der Butendimerisierung bezüglich solcher Octene, die nach Hydroformylierung, Hydrierung besonders bevorzugtes Nonanol-Gemisch liefern.

Die erhaltenen Octene werden im zweiten Verfahrensschritt in an sich bekannter Weise durch Hydroformylierung mit Synthesegas in um ein Kohlenstoffatom verlängerte Aldehyde überführt. Die Hydroformylierung von Olefinen zur Herstellung von Aldehyden ist an sich bekannt und z.B. in J. Falbe (Hrsg.): New Synthesis with Carbon Monoxide, Springer-Verlag, Berlin, 1980 beschrieben. Die Hydroformylierung erfolgt in Anwesenheit von homogen im Reaktionsmedium gelösten Katalysatoren. Als Katalysatoren werden dabei im Allgemeinen Verbindungen oder Komplexe von Metallen der VIII. Nebengruppe, speziell Co-, Rh-, Ir-, Pd-, Pt- oder Ru-Verbindungen bzw. -Komplexe eingesetzt, die unmodifiziert oder z.B. mit Amin- oder mit phosphinhaltigen Verbindungen modifiziert sein können.

Im Rahmen der vorliegenden Erfindung erfolgt die Hydroformylierung vorzugsweise in Gegenwart eines Cobalt-Katalysators, insbesondere Dicobaltoctacarbonyl [Co₂(CO)₈]. Sie erfolgt vorzugsweise bei Temperaturen von 120 bis 240, insbesondere 160 bis 200°C, und unter einem Synthesegasdruck von 150 bis 400, insbesondere 250 bis 350 bar. Die Hydroformylierung erfolgt vorzugsweise in Gegenwart von Wasser. Das Mischungsverhältnis von Wasserstoff zu Kohlenmonoxid im eingesetzten Synthesegas liegt vorzugsweise im Bereich von 70:30 bis 50:50, insbesondere 65:35 bis 55:45.

Das cobaltkatalysierte Hydroformylierungsverfahren kann als mehrstufiger Prozess durchgeführt werden, der folgende 4 Verfahrensstufen enthält: die Herstellung des Katalysators (Vorcarbonylierung), die Katalysatorextraktion, die Olefinhydroformylierung und die Entfernung des Katalysators aus dem Reaktionsprodukt (Entcobaltung). In der ersten Verfahrensstufe, der Vorcarbonylierung, wird ausgehend von einer wäßrigen Cobaltsalzlösung, z.B. Cobaltformiat oder Cobaltacetat, durch Umsetzung mit Kohlenmonoxid und Wasserstoff der für die Hydroformylierung benötigte Katalysatorkomplex hergestellt. In der zweiten Verfahrensstufe, der Katalysatorextraktion, wird der in der ersten Verfahrensstufe hergestellte Cobaltkatalysator aus der wässrigen Phase mit einer organischen Phase, vorzugsweise mit dem zu hydroformylierenden Olefin, extrahiert. Bisweilen ist es zweckmäßig, neben dem Olefin die Reaktions- und Nebenprodukte der Hydroformylierung, sofern sie wasserunlöslich und unter den gewählten Reaktionsbedingungen flüssig sind, zur Katalysatorextraktion einzusetzen. Nach der Phasentrennung wird die mit dem Cobaltkatalysator beladene organische Phase der dritten Verfahrensstufe, der Hydroformylierung, zugeführt. In der vierten Verfahrensstufe, der Entcobaltung, wird die organische Phase des Reaktoraustritts von den Cobaltcarbonylkomplexen in Gegenwart von Prozesswasser, das Ameisensäure oder Essigsäure enthalten kann, durch Behandlung mit Sauerstoff oder Luft befreit. Dabei wird der Cobaltkatalysator oxidativ zerstört, und die erhaltenen Cobaltsalze werden in die wässrige Phase zurückextrahiert. Die erhaltende wäßrige Cobaltsalzlösung aus der Entcobaltung wird in die erste Verfahrensstufe, die Vorcarbonylierung, zurückgeführt. Das erhaltene rohe Hydroformylierungsprodukt kann unmittelbar der Hydrierung zugeführt werden. Alternativ kann daraus in üblicher Weise, z.B. destillativ, eine C₉-Fraktion isoliert werden, die der Hydrierung zugeführt wird.

Die Bildung des Cobaltkatalysators, die Extraktion des Cobaltkatalysators in die organische Phase und die Hydroformylierung der Olefine kann auch in einem einstufigen Prozess im Hydroformylierungsreaktor durchgeführt werden.

Verwendbare Cobaltverbindungen sind beispielsweise Cobalt(II)-chlorid, Cobalt(II)-nitrat, deren Amin- oder Hydratkomplexe, Cobaltcarboxylate, wie Cobaltformiat, Cobaltacetat, Cobaltethylhexanoat, Cobaltnaphthenat (Co-Salze der Naphthensäure), sowie der Cobaltcaprolactamatkomplex. Unter den Hydroformylierungsbedingungen bilden sich in situ die katalytisch aktiven Cobaltverbindungen in Form von Cobaltcarbonylen. Es können auch die Carbonylkomplexe des Cobalts, wie Dicobaltoctacarbonyl, Tetracobaltdodecacarbonyl und Hexacobalthexadecacarbonyl eingesetzt werden.

Das bei der Hydroformylierung erhaltene Aldehydgemisch wird zu primären Alkoholen reduziert. Im Allgemeinen erfolgt eine teilweise Reduktion bereits unter den Hydroformylierungsbedingungen, wobei die Hydroformylierung auch so gesteuert werden kann, dass eine im Wesentlichen vollständige Reduktion erfolgt. In der Regel wird jedoch das erhaltene Hydroformylierungsprodukt in einem weiteren Verfahrensschritt mit Wasserstoffgas oder einem Wasserstoff enthaltendem Gasgemisch hydriert. Die Hydrierung findet in der Regel in Gegenwart eines heterogenen Hydrierkatalysators statt. Als Hydrierkatalysator kann ein beliebiger zur Hydrierung von Aldehyden zu primären Alkoholen geeigneter Katalysator verwendet werden. Beispiele geeigneter handelsüblicher Katalysatoren sind ' Kupferchromit, Cobalt, Cobaltverbindungen, Nickel, Nickelverbindungen, die gegebenenfalls geringe Mengen Chrom oder andere Promotoren enthalten, und Gemische von Kupfer, Nickel und/oder Chrom. Die Nickelverbindungen liegen im Allgemeinen geträgert auf Trägermaterialien, wie Tonerde oder Kieselgur vor. Weiterhin können Edelmetall enthaltende Katalysatoren, wie Platin oder Palladium, verwendet werden.

Die Hydrierung kann in Rieselfahrweise erfolgen, wobei das zu hydrierende Gemisch und das Wasserstoffgas bzw. das wasserstoffhaltige Gasgemisch z.B. im Gleichstrom über ein fest angeordnetes Bett des Hydrierkatalysators geleitet werden.

Die Hydrierung findet vorzugsweise bei einer Temperatur von 50 bis 250, insbesondere 100 bis 150°C, und einem Wasserstoffdruck von 50 bis 350, insbesondere 150 bis 300 bar, statt. Aus dem bei der Hydrierung erhaltenen Reaktionsaustrag kann die gewünschte Isononanolfraktion durch fraktionierte Destillation von den C₈-Kohlenwasserstoffen und höhersiedenden Produkten abgetrennt werden.

Im so erhältlichen Nonanol-Gemisch lassen sich die relativen Mengen der Einzelverbindungen mittels Gaschromatographie analysieren (die Prozentangaben sind Flächenprozente des Gaschromatogramms):

Der Anteil an 1-Nonanol im erfindungsgemäßen Nonanol-Gemisch liegt normalerweise bei 5 bis 15 und vorzugsweise bei 8 bis 12 %.

Der Anteil der Monomethyloctanole liegt normalerweise bei 40 bis 100, vorzugsweise bei 45 bis 80, insbesondere bei 45 bis 60 %, wobei 6-Methyl-1-octanol und 4-Methyl-1-octanol zusammen besonders bevorzugt mindestens 35 und ganz besonders bevorzugt mindestens 40 % bezogen auf das gesamte Nonanol-Gemisch ausmachen.

Der Anteil der Dimethylheptanole und Monoethylheptanole beträgt normalerweise 25 bis 80, vorzugsweise 30 bis 60 und, insbesondere 30 bis 40 %, wobei 2,5-Dimethyl-1-heptanol, 3-Ethyl-1-beptanol und 4,5-Dimethyl-1-heptanol zusammengenommen vorzugsweise mindestens 20 und insbesondere 25 % bezogen auf das gesamte Nonanol-Gemisch ausmachen.

Der Anteil der Hexanole im gesamten Nonanol-Gemisch liegt normalerweise bei 4 bis 40, vorzugsweise bei 6 bis 30 und, vor allem bei 6 bis 20 %.

Das erfindungsgemäße Nonanol-Gemisch besteht vorzugsweise zu 70 bis 99, vor allem zu 80 bis 98 und insbesondere zu 85 bis 95 % aus einem Gemisch von 1-Nonanol, Monomethyloctanolen, Dimethylheptanolen und Monoethylheptanolen.

Die Dichte des erfindungsgemäßen Nonanol-Gemischs beträgt bei 20°C normalerweise 0,75 bis 0,9, vorzugsweise 0,8 bis 0,88 und besonders bevorzugt 0,82 bis 0,84 g/cm³. Der Brechungsindex n_{D}²⁰ liegt normalerweise bei 1,425 bis 1,445, vorzugsweise bei 1,43 bis 1,44 und besonders bevorzugt bei 1,432 bis 1,438. Der Siedebereich bei Normaldruck beträgt normalerweise 190 bis 220, vorzugsweise 195 bis 215 und besonders bevorzugt 200 bis 210°C.

Als Dicarbonsäuren kommen normalerweise nichtaromatische Dicarbonsäuren mit 6 bis 20, vorzugsweise 6 bis 12 und insbesondere 6 bis 8 Kohlenstoffatomen als Gemisch und vor allem einzeln zum Einsatz, ganz besonders jeweils für sich allein Sebacinsäure oder Azelainsäure und für sich allein allen voran Adipinsäure.

Als weitere Diole kommen Kohlenwasserstoffe mit 2 bis 13 und vor allem 3 bis 11 Kohlenstoffatomen in Betracht, die vorzugsweise neben den beiden Hydroxygruppen keine weiteren Substituenten tragen und deren Kohlenwasserstoffkette durch ein oder mehrere, nicht aneinander gebundene Sauerstoffatome (-O-) unterbrochen sein können, beispielsweise 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 2-Methyl-l,3-pentandiol, 1,4-Pentandiol, 1,5-Pentandiol, 1,2-Hexandiol, 1,3-Hexandiol, 1,4-Hexandiol, 1,5-Hexandiol, 1,6-Hexandiol, Diethylenglykol, Triethylenglykol, Hydroxypivalinsäure-mononeopentylglykolester oder Gemische dieser Diole. Aus dieser Gruppe bevorzugt sind Hydroxypivalinsäure-mononeopentylglykolester und 1,2-Propandiol jeweils für sich allein, und besonders bevorzugt ist 1,4-Butandiol für sich allein.

Die Herstellung der erfindungsgemäßen Polyester wird in an sich bekannter Weise durchgeführt (vgl. etwa "Ullmann's Encyclopedia of Industrial Chemistry", 5. Edition, VCH Verlagsgesellschaft mbH, Weinheim, Vol. A1, Seite 214 ff. und Vol. A9, Seiten 572-575). Kettenlänge bzw. mittleres Molekulargewicht der Polyester lassen sich durch Zugabezeitpunkt und -menge des Nonanol-Gemischs, die vom Fachmann routinemäßig leicht ermittelt werden können, gezielt einstellen. Als Katalysatoren kommen übliche Veresterungskatalysatoren, insbesondere Dialkyltitanate ((RO)₂TiO₂, worin R z.B. für iso-Propyl, n-Butyl, iso-Butyl steht), Methansulfonsäure, Schwefelsäure und vor allem Isopropyl-n-butyltitanat zum Einsatz.

In einer bevorzugten Ausführungsform werden Adipinsäure, Neopentylglykol, das weitere Diol oder die weiteren Diole, die Gesamtmenge des Nonanol-Gemischs und der Veresterungskatalysator im Reaktionsgefäß vorgelegt. Diese Reaktionsgemisch wird zunächst auf 100 bis 140°C erwärmt und durch Rühren homogenisiert. Danach wird bei Normaldruck weiter auf 160 bis 190°C erhitzt. Die Veresterung unter Wasserabspaltung setzt normalerweise bei ca. 150°C ein. Das gebildete Reaktionswasser wird destillativ über eine Kolonne abgetrennt. Sofern Diol(e) und/oder Nonanol-Gemisch dabei überdestillieren, werden sie in das Reaktionsgefäß zurückgeführt. Anschließend wird das Reaktionsgemisch auf 200 bis 250°C erhitzt, und bei einem Druck von 150 bis 300 mbar wird weiteres Reaktionswasser mittels Durchleiten von Stickstoff aus dem Reaktionsgemisch gestrippt. Das Reaktionsgemisch wird noch so lange unter diesen Bedingungen weiter gerührt, bis seine Säurezahl einen Wert von. <15 mg KOH pro g des Reaktionsgemischs erreicht hat. Anschließend wird zur Veresterung freier Carbonsäuregruppen bei 200 bis 250°C und einem Druck im Bereich von 10 bis 150 mbar weiter umgesetzt. Restwasser und überschüssiges Nonanol-Gemisch werden dabei solange mittels eines erhöhten Stickstoffstroms unter Rühren ausgestrippt, bis die Säurezahl pro g des Reaktionsgemischs einen Wert von <1 mg KOH erreicht hat. Danach wird das Reaktionsgemisch bei 100 bis 140°C filtriert.

Die so erhältlichen erfindungsgemäßen Polyester bestehen normalerweise
- zu 40 bis 50, bevorzugt zu 45 bis 50 und besonders bevorzugt zu 48 bis 50 mol-% aus Adipinsäureeinheiten,
- zu 5 bis 48, bevorzugt zu 10 bis 25 und besonders bevorzugt zu 15 bis 20 mol-% aus Neopentylglykoleinheiten,
- zu 2 bis 35, bevorzugt zu 15 bis 30 und besonders bevorzugt zu 20 bis 28 mol-% aus Einheiten eines oder mehrerer weiterer Diole und
- zu 2 bis 20, bevorzugt zu 5 bis 15 und besonders bevorzugt zu 8 bis 12 mol-% Nonanoleinheiten.

Die erfindungsgemäßen Polyester haben in der Regel Dichten zwischen 1 und 1,15, bevorzugt 1,03 und 1,12 und besonders bevorzugt 1,04 und 1,11 g/cm³. Ihre Viskosität liegt normalerweise zwischen 1000 und 20000, bevorzugt 1500 und 15000 und besonders bevorzugt 1800 bis 14000 mPs*s. Der Brechungsindex n_{D}²⁰ liegt in der Regel zwischen 1,45 und 1,485, bevorzugt 1,460 und 1,480 und besonders bevorzugt 1,462 und 1,475. Die mittlere Molmasse, bestimmt mittels Gelpermeationschromatographie, liegt normalerweise zwischen 500 und 15000, bevorzugt 2000 und 10000 und besonders bevorzugt 2800 und 8000 (Polystyroläquivalente, s.u.).

Die chemische Zusammensetzung der erfindungsgemäßen Weichmacher lässt sich etwa bestimmen, indem man ihn zu den Monomerbausteine Dicarbonsäure(n), Neopentylglykol, weiteres Diol bzw. weitere Diole und Nonanol-Gemisch hydrolysiert und die dabei gebildeten Mengen dieser Verbindungen in an sich bekannter Weise bestimmt.

Für die Herstellung und Untersuchung der unter Einsatz der erfindungsgemäßen Polyester hergestellten Weich-PVC-Compounds geht man vorzugsweise wie folgt vor:

Zunächst wird ein Gemisch hergestellt aus PVC-Pulver, bevorzugt PVC-Pulver, das nach dem Suspensionsverfahren hergestellt wurde, dem erfindungsgemäßen Polyester als Weichmacher sowie ggf. weiteren Zusätzen, wie Stabilisatoren, Gleitmittel, Füllstoffe, Pigmente, Farbstoffe, Flamminhibitoren, Lichtstabilisatoren, Antistatika, Treibmittel, Biostabilisatoren. Dieses Gemisch wird anschließend auf einem Mischwalzwerk plastifiziert und zu einem sog. Walzfell gewalzt. Das Walzfell wird anschließend zu einer Weich-PVC-Folie verpreßt, an der dann die anwendungstechnischen Untersuchungen durchgeführt werden.

Das Migrationsverhalten des Weichmachers lässt sich (entsprechend DIN 53405) bestimmen, indem man den Gewichtsverlust einer Weichmacher-haltigen Probe zwischen zwei Proben eines anderen Kunststoffs ohne diesen Weichmacher beobachtet.

Die Verträglichkeit eines Weichmachers läßt sich über den Gewichtsverlust in einer Wärmekammer bei hoher Luftfeuchtigkeit ermitteln.

Die Erfindung wird anhand nachfolgender Beispiele näher erläutert.

### Beispiele

Es wurde Neopentylglykol und 1,4-Butandiol von der BASF AG verwendet; Isopropyl-n-butyltitanat stammte von DuPont.

### A) Herstellung eines erfindungsgemäßen Weichmachers

### A.1) Butendimerisierung

Die Butendimerisierung wurde in einem adiabatischen Reaktor bestehend aus zwei Teilreaktoren (Länge: jeweils 4 m, Durchmesser: jeweils 80 cm) mit Zwischenkühlung bei 30 bar kontinuierlich durchgeführt. Als Einsatzprodukt wurde ein Raffinat II mit folgender Zusammensetzung verwendet:

| | |
|---|---|
| iso-Butan | 2 Gew.-% |
| n-Butan | 10 Gew.-% |
| iso-Buten | 2 Gew.-% |
| 1-Buten | 32 Gew.-% |
| trans-2-Buten | 37 Gew.-% |
| cis-2-Buten | 17 Gew.-% |

Als Katalysator diente ein Katalysator gemäß der DE-A 43 39 713, bestehend aus 50 Gew.-% NiO, 12,5 Gew.-% TiO₂, 33,5 Gew.-% SiO₂ und 4 Gew.-% Al₂O₃ in Form von 5x5 mm-Tabletten. Die Umsetzung wurde mit einem Durchsatz von 0,375 kg Raffinat II/l Katalysator-h einem Rückführverhältnis von unumgesetzten C₄-Kohlenwasserstoffen zu frischem Raffinat II von 3, einer Eintrittstemperatur am 1. Teilreaktor von 38°C und einer Eintrittstemperatur am 2. Teilreaktor von 60°C durchgeführt. Der Umsatz, bezogen auf die im Raffinat II enthaltenen Butene, lag bei 83,1 %, die Selektivität zu den gewünschten Octenen betrug 83,3 %. Durch fraktionierte Destillation des Reaktoraustrags wurde die Octenfraktion von unumgesetztem Raffinat II und den Hochsiedern abgetrennt.

### A.2) Hydroformylierung und Hydrierung

750 g des gemäß Abschnitt A.1 der Beispiele hergestellten Octengemisches wurden diskontinuierlich in einem Autoklaven mit 0,13 Gew.-% Dicobaltoctacarbonyl (Co₂(CO)₈) als Katalysator unter Zusatz von 75 g Wasser bei 185°C und unter einem Synthesegasdruck von 280 bar bei einem Mischungsverhältnis von H₂ zu CO von 60/40 5 Stunden umgesetzt. Der Verbrauch an Synthesegas, zu erkennen an einem Druckabfall im Autoklaven, wurde durch Nachpressen ausgeglichen. Nach dem Entspannen des Autoklaven wurde der Reaktionsaustrag mit 10 Gew.-%-iger Essigsäure durch Einleiten von Luft oxidativ vom Cobaltkatalysator befreit, und die organische Produktphase wurde mit Raney-Nickel bei 125°C und einem Wasserstoffdruck von 280 bar 10 h lang hydriert. Durch fraktionierte Destillation des Reaktionsaustrages wurde die Isononanolfraktion von den C₈-Paraffinen und den Hochsiedern abgetrennt.

Die Zusammensetzung der Isononanolfraktion wurde mittels Gaschromatographie analysiert. Eine Probe wurde zuvor mit 1 ml N-Methyl-N-trimethylsilyltrifluoracetamid pro 100 µl Probe 60 Minuten bei 80°C trimethylsilyliert. Zum Einsatz kam eine Trennsäule vom Typ Hewlett Packard Ultra 1 von 50 m Länge, einem Innendurchmesser von 0,32 mm bei einer Filmdicke von 0,2 µm. Injektor- und Detektortemperatur waren 250°C, die Ofentemperatur betrug 120°C. Der Split war 110 ml/min. Als Trägergas diente Stickstoff. Der Vordruck war auf 200 kPa eingestellt. Es wurde 1 µl der Probe eingespritzt und mittels FID detektiert. Folgende Probenzusammensetzung (gaschromatographische Flächenprozente) wurde so ermittelt:

| | |
|---|---|
| 11,0 % | 1-Nonanol |
| 20,8 % | 6-Methyl-1-octanol |
| 20,5 % | 4-Methyl-1-octanol |
| 5,3 % | 2-Methyl-1-octanol |
| 11,0 % | 2,5-Dimethyl-1-heptanol |
| 8,7 % | 3-Ethyl-1-heptanol |
| 6,2 % | 4,5-Dimethyl-1-heptanol |
| 2,9 % | 2-Ethyl-1-heptanol |
| 2,8 % | 2,3-Dimethyl-1-heptanol |
| 3,0 % | 2-Ethyl-4-methyl-l-hexanol |
| 2,7 % | 2-Propyl-1-hexanol |
| 1,6 % | 3-Ethyl-4-methyl-1-hexanol |
| Rest zu 100 % | Sonstige Alkanole mit 9 Kohlenstoffatomen |

Die Dichte dieses Nonanol-Gemischs wurde bei 20°C zu 0,8326 g/cm³ und der Brechungsindex n_{D}²⁰ zu 1,4353 gemessen. Der Siedebereich lag bei Normaldruck bei 204 bis 209°C.

### A.3) Veresterung

6500 kg Adipinsäure, 1950 kg Neopentylglykol (90 %-ig), 2276 kg 1,4-Butandiol, 1294 kg Nonanol-Gemisch aus Abschnitt A.2 der Beispiele sowie 0,5 kg Isopropyl-n-butyltitanat wurden in einem 15 m³-Reaktionskessel vorgelegt, auf 130°C erwärmt und mittels Rühren homogenisiert. Das Reaktionsgemisch wurde dann bei Normaldruck auf 175°C erwärmt und 4 h gerührt. Die Veresterung unter Wasserabspaltung setzte bei ca. 150°C ein. Das gebildete Reaktionswasser wurde destillativ über eine Kolonne abgetrennt. Überdestilliertes Neopentylglykol, 1,4-Butandiol und Nonanol-Gemisch wurden abgetrennt und zurückgeführt. Anschließend wurde das Reaktionsgemisch auf 230°C erwärmt, ein Vakuum von 200 mbar angelegt und mittels Durchleiten von Stickstoff (2 m³/h) weiteres Reaktionswasser aus dem Reaktionsgemisch entfernt. Nach insgesamt 22 h Rühren unter diesen Reaktionsbedingungen war die Säurezahl des Reaktionsgemisches auf einen Wert von <15 mg KOH/g gefallen. Das Reaktionsgemisch wurde dann bei 230°C und 100 mbar gerührt. Dabei wurde ein erhöhter Stickstoffstrom von 30 m³/h durchgeleitet, mittels dessen Restwasser und überschüssiges Nonanol-Gemisch entfernt wurden. Nach 10 h Rühren unter diesen Reaktionsbedingungen war die Säurezahl des Reaktionsgemisches auf einen Wert von <1 mg KOH/g gefallen. Danach wurde das Reaktionsprodukt bei 120°C filtriert, vor allem um unlösliche Katalysatorfolgeprodukte abzutrennen.

Der auf diese Weise hergestellte Weichmacher bestand zu 49 mol-% aus Adipinsäureeinheiten, zu 17 mol-% aus Neopentylglykoleinheiten, zu 25 mol-% aus 1,4-Butandioleinheiten und zu 9 mol-% aus Nonanoleinheiten. Der Weichmacher hatte eine Dichte von 1,092 g/cm³, eine Viskosität von 11710 mPa*s und einen Brechungsindex n_{D}²⁰ von 1,471.

Die mittlere Molmasse betrug 6400 (Polystyroläquivalente). Sie wurde mittels Gelpermeationschromatographie anhand einer mit Polystyrolen (von Macherey & Nagel oder Polymer Laboratories) erstellten Eichkurve ermittelt. Dazu wurden ca. 50 mg einer Probe mit Tetrahydrofuran auf 10 ml Gesamtvolumen aufgefüllt. Die Messung erfolgt an einer Kombination von 4 PL-GEL-Säulen von je 300 mm Länge und 7,5 mm Durchmesser von Polymer Laboratories:

| | |
|---|---|
| Korngröße | 5 µm |
| Porenweite | 2 der Säulen: 100 nm, 2 der Säulen: 1000 nm |
| Mobile Phase | Tetrahydrofuran |
| Fluss | 0,8 ml/min |
| Injektionsvolumen | 100 µl |
| Temperatur | 35°C |
| Detektion | Brechungsindex-Detektor. |

### B) Herstellung von Weich-PVC-Compounds

### B.1.) PVC-Compound mit einem erfindungsgemäßen Weichmacher

150 g Suspensions-PVC vom Typ "Vinoflex® S 7114" (BASF AG), 105 g des Weichmachers aus Abschnitt A der Beispiele und 2 g Ba/Zn-Stabilisator vom Typ "Lankromark® LZB 753" wurden mit einem Handmixer bei Raumtemperatur vermischt. Die Mischung wurde anschließend auf einem dampfbeheizten Labormischwalzwerk (Fa. Collin, Typ "150") plastifiziert und zu einem Walzfell verarbeitet. Die Temperatur der beiden Walzen betrug jeweils 170°C; die Drehzahlen lagen bei 15 Umdrehungen/min. für die vordere Walze und 12 Umdrehungen/min. für die hintere Walze. Die Walzzeit betrug 5 Minuten. Man erhielt so ein Walzfell mit einer Dicke von 0,55 mm. Das abgekühlte Walzfell wurde anschließend bei einer Temperatur von 180°C und einem Druck von 220 bar innerhalb von 400 s auf einer Presse vom Typ "400 P" der Fa. Collin zu einer Weich-PVC-Folie mit einer Dicke von 0,5 mm verpreßt.

### B.2) PVC-Compound mit einem bekannten Weichmacher

Analog zu Beispiel B.1 wurde eine Weich-PVC-Folie hergestellt unter Einsatz eines kommerziell verfügbaren Polyester-Weichmachers vom Typ "DIC W-2050" der Fa. Dainippon Ink & Chemicals. Dieser Weichmacher war aus 50 mol-% Adipinsäureeinheiten, 31 mol-% Neopentylglykoleinheiten, 9 mol-% 1,4-Butandioleinheiten und 9 mol-% 2-Ethylhexanoleinheiten als Abschlußgruppe aufgebaut.

### C) Prüfung der PVC-Compounds

An den Weich-PVC-Folien aus Abschnitt B) wurden anschließend die Verträglichkeit sowie das Migrationsverhalten gegenüber folgenden Kunststoffen bestimmt:
- einem Acrylnitril-Butadien-Styrol-Copolymer (Typ "Terluran 877® T"),
- einem Polystyrol (Typ "Polystyrol® 168 N"),
- einem schlagzähmodifizierten Polystyrol (Typ "Polystyrol® 474 K"),
- einem Acrylat-Styrol-Acrylnitril-Copolymer (Typ "Luran® S 757 R") und
- einem Polymethylmethacrylat (Typ "Lucryl® G 88 E").

Das Migrationsverhalten der Weichmacher wurde (gemäß DIN 53405) wie folgt bestimmt: Es wurde eine scheibenförmige Probe des Weich-PVC-Compounds mit einem Durchmesser von 50 mm und einer Dicke von 0,5 mm zwischen zwei scheibenförmige Proben eines anderen Kunststoffs mit einem Durchmesser von 60 mm und einer Dicke von 1 mm platziert. Die Sandwich-förmige Probe wurde dann zwischen zwei Glasplatten gebracht, mit einem Gewicht von 5 kg belastet und in einem Trockenschrank 30 Tage bei 50°C gelagert. Als Maßstab für das Migrationsverhalten des Weichmachers diente der Gewichtsverlust des Weich-PVC-Compounds nach 30 Tagen.

Die Verträglichkeit der Weichmacher im Weich-PVC-Compound wurde bestimmt, indem das Weich-PVC-Compound in einem Trockenschrank bei einer Temperatur von 70°C und 100 % relativer Luftfeuchtigkeit über einen längeren Zeitraum gelagert wurde. Der Gewichtsverlust des Weich-PVC-Compounds durch ausgetretenen Weichmacher wurde nach bestimmten Zeitintervallen durch Auswiegen ermittelt.

Für diese Prüfung wurden als Prüfkörper Folien mit einer Größe von 75 x 110 x 0,5 mm verwendet. Die Folien wurden an der Breitseite gelocht, beschriftet (Lötkolben) und gewogen. Die fertigen gewogenen Folien wurden auf ein Drahtgestell aufgehängt und in eine Glaswanne gestellt, deren Boden ca. 5 cm hoch mit vollentsalztem Wasser bedeckt war, wobei sich die Folien nicht gegenseitig berührten und die Unterkanten der Folien nicht im Wasser hingen. Die Glaswanne wurde mit einer Polyethylen-Folie wasserdampfdicht verschlossen, damit der später in der Glaswanne entstehende Wasserdampf nicht entweichen konnte. Der Wasserstand in den Glasbecken wurde täglich kontrolliert, und evt. entwichenes Wasser wurde ersetzt. Täglich wurden der Glaswanne jeweils 2 der Folien entnommen und für 1 h an der Luft frei aufgehängt. Danach wurden die entnommenen Folien mit Methanol oberflächlich gereinigt und noch für 16 h bei 70°C in einem Trockenschrank ohne zusätzliche Luftbefeuchtigung mit Zwangskonvektion frei hängend getrocknet. Hiernach wurden die Folien für 1 Stunde frei aufgehängt und danach gewogen. Das arithmetische Mittel der Gewichtsverluste der Folien pro Durchgang wurde errechnet.

Die Ergebnisse der Versuche sind in Tabelle 1 zusammengestellt.

**Tabelle 1**

| Weich-PVC-Compound | gemäß Beispiel B.1 (erfindungsgemäß) | gemäß Beispiel B.2 (Vergleich) |
|---|---|---|
| Verträglichkeitsprüfung bei 70°C und 100 % relativer Luftfeuchtigkeit: Gewichtsverlust des Weich-PVC-Compounds (Gew.-%) | | |
| | | |
| Nach 1 d | 0,10 | 0,24 |
| | | |
| Nach 3 d | 0,18 | 0,29 |
| | | |
| Nach 7 d | 0,25 | 0,36 |
| | | |
| Nach 14 d | 0,25 | 0,43 |
| | | |
| Nach 28 d | 0,24 | 0,57 |
| | | |
| Migrationsprüfung bei 50°C: Gewichtsverlust des Weich-PVC-Compounds (Gew.-%) nach 30 d bei Kontakt mit: | | |
| | | |
| Acrylnitril-Butadien-Styrol-Copolymer (Typ "Terluran® 877 T") | 0,4 | 0,8 |
| | | |
| Polystyrol (Typ "Polystyrol® 168 N") | 0,1 | 0,6 |
| | | |
| Schlagzähmodifiziertem Polystyrol (Typ "Polystyrol® 474 K") | 0,2 | 0,7 |
| | | |
| Acrylat-Styrol-Acrylnitril-Copolymer (Typ "Luran® S 757 R") | 0,6 | 0,8 |
| | | |
| Polymethylmethacrylat (Typ "Lucryl® G 88 E") | 0,3 | 0,5 |

Die versuchsergebnisse in Tabelle 1 zeigen, dass die erfindungsgemäßen Polyester-Weichmacher eine deutlich höhere Verträglichkeit und eine deutlich geringere Migrationsneigung aufweisen-erkennbar jeweils am geringeren Gewichtsverlust - als ein kommerziell erhältliches Produkt, dass nicht mit Nonanol-Gemisch abgeschlossen war.

## Patentansprüche

1. Als Weichmacher geeignete Polyester, erhältlich durch Umsetzung von aliphatischen Dicarbonsäuren, Neopentylglykol, mindestens einem weiteren Diol und einem Nonanol-Gemisch, wobei das Nonanol-Gemisch vorwiegend aus 1-Nonanol, Monomethyloctanolen, Dimethylheptanolen und Monoethylheptanolen besteht.

2. Polyester nach Anspruch 1, in denen die Monomethyloctanole im gesamten Nonanol-Gemisch einen Anteil von 40 bis 100 gaschromatographischen Flächenprozenten haben.

3. Polyester nach Anspruch 1 oder 2, bei deren Herstellung man als weiteres Diol 1,4-Butandiol einsetzt.

4. Polyester nach den Ansprüchen 1 bis 3, bei deren Herstellung man als weiteres Diol Hydroxypivalinsäure-mononeopentylglykolester einsetzt.

5. Polyester nach den Ansprüchen 1 bis 4, bei deren Herstellung man als aliphatische Dicarbonsäure Adipinsäure einsetzt.

6. Verfahren zur Herstellung der Polyester gemäß den Ansprüchen 1 bis 5, **dadurch gekennzeichnet, dass** man aliphatische Dicarbonsäuren, Neopentylglykol, mindestens ein weiteres Diol und ein Nonanol-Gemisch, das vorwiegend aus 1-Nonanol, Monomethyloctanolen, Dimethylheptanolen und Monoethylheptanolen besteht, unter an sich bekannten Veresterungsbedingungen umsetzt.

7. Verwendung der Polyester gemäß den Ansprüchen 1 bis 5 als Weichmacher für Kunststoffe.

8. Verwendung der Polyester gemäß den Ansprüchen 1 bis 5 als Weichmacher für Polymere.

9. Verwendung der Polyester gemäß den Ansprüchen 1 bis 5 als Weichmacher für Polymere oder Kunststoffe auf PVC-Basis.

## Claims

1. A polyester suitable as a plasticizer and obtainable by reacting aliphatic dicarboxylic acids, neopentyl glycol, at least one other diol and a nonanol mixture, where the nonanol mixture is mainly composed of 1-nonanol, of monomethyloctanols, of dimethylheptanols and of monoethylheptanols.

2. A polyester as claimed in claim 1, in which the entire nonanol mixture has a proportion of from 40 to 100 percent, by gas-chromatogram area, of monomethyloctanols.

3. A polyester as claimed in claim 1 or 2, the preparation of which uses 1,4-butanediol as other diol.

4. A polyester as claimed in any of claims 1 to 3, the preparation of which uses the mononeopentyl glycol ester of hydroxypivalic acid as other diol.

5. A polyester as claimed in any of claims 1 to 4, the preparation of which uses adipic acid as aliphatic dicarboxylic acid.

6. A process for preparing the polyester as claimed in any of claims 1 to 5, which comprises reacting aliphatic dicarboxylic acids, neopentyl glycol, at least one other diol, and a nonanol mixture composed mainly of 1-nonanol, of monomethylcotanols, of dimethylheptanols and of monoethylheptanols, under esterification conditions known per se.

7. The use of the polyester as claimed in any of claims 1 to 5 as a plasticizer for plastics.

8. The use of the polyester as claimed in any of claims 1 to 5 as a plasticizer for polymers.

9. The use of the polyester as claimed in any of claims 1 to 5 as a plasticizer for polymers or plastics based on PVC.

## Revendications

1. Polyesters appropriés en tant que plastifiants, que l'on peut obtenir en faisant réagir des acides dicarboxyliques aliphatiques, le néopentylglycol, au moins un diol supplémentaire et un mélange de nonanols, où le mélange de nonanols se compose en majorité de 1-nonanol, de monométhyloctanols, de diméthylheptanols et de monoéthylheptanols.

2. Polyesters selon la revendication 1, dans lesquels, dans le mélange de nonanols total, les monoéthyloctanols représente de 40 à 100 pourcent de la surface du chromatogramme d'une chromatographie en phase gazeuse.

3. Polyesters selon la revendication 1 ou 2, **caractérisés en ce que**, pour leur fabrication on met en oeuvre, en tant que diol supplémentaire, le 1,4-butanediol.

4. Polyesters selon les revendications 1 à 3, **caractérisé en ce que**, pour leur fabrication on met en oeuvre, en tant que diol supplémentaire, l'ester du mononéopentyleglycol et de l'acide hydroxypivalinique.

5. Polyesters selon les revendications 1 à 4, **caractérisé en ce que**, pour leur fabrication on met en oeuvre, en tant qu'acide aliphatique dicarboxylique, l'acide adipique.

6. Procédé pour la fabrication des polyesters selon les revendications 1 à 5, **caractérisé en ce que**, l'on met à réagir, dans des conditions d'estérification généralement connues, des acides aliphatiques dicarboxyliques, le néopentylglycol, au moins un diol supplémentaire et un mélange de nonanols, qui se compose en majorité de 1-nonanol, de monométhyloctanols, de diméthylheptanols et de monoéthylheptanols.

7. Utilisation des polyesters selon les revendications 1 à 5 en tant que plastifiants pour matières synthétiques.

8. Utilisation des polyesters selon les revendications 1 à 5 en tant que plastifiants pour les polymères.

9. Utilisation des polyesters selon les revendications 1 à 5 en tant que plastifiants pour les polymères ou pour les matières synthétiques à base de PVC.
